# EUROPEAN PATENT APPLICATION

(11) **EP 4 672 147 A1**
(43) Date of publication of application: **31.12.2025**
(21) Application number: 24184633.6
(22) Date of filing: 26.06.2024
(51) Int. Cl.: G06T 7/33, G06T 7/55, G06T 17/00

(54) **METHOD AND SYSTEM FOR REPRODUCING ABSOLUTE POSES OF A SCANNER FOR CAPTURING 3D SCANS OF AN OBJECT**

(71) Applicant: Siemens Aktiengesellschaft, 80333 München (DE)
(72) Inventor: Haarbach, Adrian, 81241 München (DE)
(74) Representative: Siemens Patent Attorneys

(57) **Abstract**

The invention relates to reproducing absolute poses of a scanner when capturing a plurality of 3D scans F(s) of an object which is equipped with dedicated markers visible in the scans. In each scan of a pair of scans, triangles formed from representations of the markers in those scans are compared. The best relative pose of the respective scans of the pair is derived from relative poses of congruent triangles of those scans. The best relative poses of all possible scan pairs are then processed to determine the absolute poses.

## Description

The invention relates to reproducing absolute poses of a scanner for capturing 3D scans of an object. The invention enables accurate stitching of the 3D scans based on the absolute poses to generate a 3D model of the object.

Multiple scan alignment is a known approach of 3D computer vision to create digital representations of objects by registering and fusing multiple views of the same object captured from different angles into a single, consistent 3D model. Different ones of the multiple views are captured from different positions and perspectives onto the object, resulting in a plurality of 3D scans. The individual scans are then fused or "stitched" to generate the holistic 3D model of the object. However, accurate stitching requires information about the 6D poses of the scanner, e.g. a 3D camera, for each and every scan.

One approach to enable accurate stitching applies uncoded, i.e. indistinguishable, 3D markers, which are invariant to the scanner viewpoint, e.g. in the form of spheres which are noticeable in the scans, e.g. "visible" in case the scanning technology is based on optical detection. They and their locations in 3D can later be recognized automatically and precisely within the scans due to proper calibration of these hemispherical laser scanners. Such markers are placed in the scene and especially at the object to be captured so that the individual scans, each typically including a plurality of representations of the markers, can be stitched based on those marker representations. For example, the markers might have a reflective surface so that their representations in a scan appear as bright spots or pixels.

However, stitching requires that the same markers and their representations in the resulting scans, respectively, are identified in different scans, but it is usually not possible to automatically and reliably assign them an identity that stays consistent across frames. Thus, manual intervention is still required which makes the approach inaccurate, error-prone, and cumbersome.

Therefore, a solution is required which enables automatic stitching of 3D scans of an object for subsequent generation of a 3D model of the object. This is solved by the method METH suggested in claim 1 and a system according to claim 14.

The method METH is suitable for reproducing absolute poses POSABS(a) of a scanner used for capturing a plurality of 3D scans F(s) of an object OBJ, which is equipped with a plurality M'≥3 of markers MARK(m'), for subsequent stitching of at least two of the scans F(s) to generate a holistic 3D representation MOD3D of the object OBJ. Each one of the scans F(s) includes a plurality M(s)≥3 of marker representations R_MARK(s;m) of the markers MARK(m'). Each marker representation R_MARK(s;m) can be, for example, a 3D coordinate relative to a coordinate system CS(s) of the respective scan F(s), wherein the 3D coordinate represents the position of the marker MARK(s;m) in the 3D scan F(s).

The method METH includes a first step S_REGP of registering, which includes a plurality of pairwise registration processes REG(n) of each two scans F(s1), F(s2) of a scan-pair PRF(n)={F(s1);F(s2)}, based on one or more determined geometric arrangements TRIA(s1;t1), TRIA(s2;t2) of marker representations R_MARK(s1;m1), R_MARK(s2;m2) included in the respective scan F(s1), F(s2). Thus, a geometric arrangement, e.g. a triangle, TRIA(s;t) is formed from a corresponding plurality of the marker representations R_MARK(s;m). A best relative pose POSE(n) between the concerned scans F(s1), F(s2) is determined in each pairwise registration REG(n) and for each pair PRF(n) based on the determined geometric arrangements TRIA(s1;t1), TRIA(s2;t2).

In a second step S_DETPOSEABS of the method METH, the best relative poses POSE(n) are processed to generate the absolute poses POSABS(a).

In concrete, the absolute poses POSABS(a) with a=1,...,A determined therewith represent the scanner 110 poses for capturing the 3D scans F(s).

The one or more geometric arrangements TRIA(s;t) included in scan F(s) can be polygons, which are determined based on the marker representations R_MARK(s;m) included in the scan F(s), such that marker representations R_MARK(s;m) determining one of the polygons TRIA(s;t1) of scan F(s) represent the vertices of the respective polygon TRIA(s;t1) such that each one of the polygons TRIA(s;t) of the scan F(s) is characterized by a respective number X of the scan's F(s) marker representations R_MARK(s;m), wherein X represents the number of vertices of the polygon, e.g. X=3 for a triangle.

In each pairwise registration REG(n), i.e. for each scan-pair PRF(n), the best relative pose POSE(n) between the scans F(s1), F(s2) of the concerned scan-pair PRF(n) is determined in a step S_DETPOSEREL(n) of the step S_REGP of registering based on specific relative poses POSERELTR(n;k) of at least one geometric arrangement TRIA(s1 ;t1) included in one F(s1) of the scans F(s1), F(s2) compared to at least one corresponding geometric arrangement TRIA(s2;t2) included in the other one F(s2) of the scans F(s1), F(s2) of the pair PRF(n). The specific relative poses are determined based on a comparison of at least one geometric arrangement TRIA(s1 ;t1) of the first scan F(s1) with a corresponding geometric arrangement TRIA(s2;t2) of the second scan F(s2).

In one possible embodiment and applied in the following, two geometric arrangements TRIA(s1 ;t1), TRIA(s2;t2) of two respective scans F(s1), F(s2) are assumed to be "corresponding" in case they have similar geometric dimensions. "Similar geometric dimensions" can be assumed to be available in case the concerned geometric arrangements TRIA(s1 ;t1), TRIA(s2;t2) are essentially congruent to each other. Furthermore, two geometric arrangements TRIA(s1;t1), TRIA(s2;t2) are assumed to be "essentially congruent" in case the lengths of their sides and edges, respectively, corresponding to each other do not differ by more than a threshold THRES_L, e.g. THRES_L=3%.

Therein, preferably only those geometric arrangements TRIA(s1;t1'), TRIA(s2;t2') included in the scans F(s1), F(s2) are processed in the step S_DETPOSEREL(n) to determine the best relative pose POSE(n) which are corresponding to each other.

Finding the specific relative poses POSERELTR(n;k) in the step S_DETPOSEREL(n) might include, for each scan-pair PRF(n), an identification of pairs PRTR(n;k), consisting of corresponding geometric arrangements TRIA(s1;t1), TRIA(s2;t2) of the first scan F(s1) and of the second scan F(s2) of the pair PRF(n) in a step S_IDENTCONGR(n). Then, for each identified pair PRTR(n;k), i.e. for each k, of corresponding geometric arrangements TRIA(s1;t1'), TRIA(s2;t2'), a specific relative pose POSERELTR(n;k) between the concerned corresponding geometric arrangements TRIA(s1;t1'), TRIA(s2;t2') is determined in a step S_SPECDET(n), e.g. with Umeyama [22], and a respective residual R(n;k) is determined in a step S_RESI(n;k). The residual R(n;k) might represent a quality measure for the corresponding specific relative pose POSERELTR(n;k). The best relative pose POSE(n) is then determined in a step S_BEST(n) to be the one specific relative pose POSERELTR(n;k') with the best residual R(n;k'). Depending on the approach to determine the residual, the "best" residual can be the highest or the lowest one of the determined residuals R(n;k).

In the step S_IDENTCONGR(n) for finding corresponding geometric arrangements the geometric arrangements TRIA(s1;t1) of the first scan F(s1) of the pair PRF(n) and the geometric arrangements TRIA(s2;t2) of the second scan F(s2) of the pair PRF(n) can be compared to each other. In case one of the geometric arrangements TRIA(s1;t1') of the first scan F(s1) is found to be corresponding, e.g. essentially congruent, to one of the geometric arrangements TRIA(s2;t2') of the second scan F(s2), such congruent geometric arrangements TRIA(s1;t1'), TRIA(s2;t2') are assigned to each other to form the pair PRTR(n;k) of corresponding geometric arrangements.

Finding the residual R(n;k') for a certain pair PRTR(n;k') of corresponding geometric arrangements TRIA(s1;t1'), TRIA(s2;t2') might be determined by using the respective specific relative pose POSERELTR(n;k') to combine the marker representations R_MARK(m1;F(s1)) of one F(s1) of the scans and the marker representations R_MARK(m2;F(s2)) of the other one F(s2) of the scans F(s1), F(s2) to generate a virtual joint scan SCJ(n;k'), which includes the marker representations R_MARK(m1;F(s1)), R_MARK(m2;F(s2)) of both the first scan F(s1) and the second scan F(s2). For example, the respective specific relative pose POSERELTR(n;k') can be used to project the marker representations R_MARK(m1;F(s1)) included in the first scan F(s1) into the second scan F(s2), i.e. into the coordinate system of the second scan F(2), to generate the virtual joint scan SCJ(n;k'). Subsequently, a plurality of euclidic mutual distances between those "inlying" marker representations R_MARK(m1';F(s1)), R_MARK(m2';F(s2)) of the first scan F(s1) and the second scan F(s2) is determined, which are distanced from each other in the coordinate system of the virtual joint scan SCJ(n;k') by less than a threshold THRES_RAD. The residual R(n;k') can then be determined based on the mean distance DIS(n;k') of the plurality of determined euclidic mutual distances and/or based on the number NMRAD of the inlying marker representations R_MARK(m1';F(s1)), R_MARK(m2';F(s2)), i.e. of those marker representations R_MARK(m1';F(s1)), R_MARK(m2';F(s2)), which are distanced from each other in the joint scan SCJ(n;k') by less than the threshold THRES_RAD.

Consequently, the residual R(n;k') improves with decreasing mean distance DIS(n;k') and/or with increasing number NMRAD, depending on which one of the parameters is considered. For example, in case only the mean distance is considered, the "best" residual would be the lowest one of the determined residuals R(n;k).

Therein, the virtual joint scan SCJ(n;k') can be a combination, e.g. an overlay, of the marker representations R_MARK(m2;F(s2)) of the second scan F(s2) and the transposed marker representations R_MARK'(m1;F(s1))=TRANS(R_MARK'(m1;F(s1))) of the first scan F(s1), wherein the transposed marker representations R_MARK'(m1;F(s1)) of the first scan F(s1) are generated by applying the specific relative pose POSERELTR(n;k') to each one of the marker representations R_MARK(m1;F(s1)) of the first scan F(s1), so that each one of the marker representations R_MARK(m1;F(s1)) is transposed from the coordinate system CS(s1) of the first scan F(s1) into the coordinate system CS(s2) of the second scan F(s2).

The following explains based on which vertices and marker representations, respectively, the geometric arrangements are determined in each scan. Preferably, not all marker representations R_MARK(s;m) of a scan F(s) are used to determine the geometric arrangements TRIA(s;t) of that scan F(s), but only "relevant" ones. Thus, instead of using all R_MARK(s;m), the determination of the geometric arrangements TRIA(sc;t) of scan F(sc) can be based only on relevant marker representations R_MARK(sc;m) of the scan F(sc) such that only the relevant marker representations R_MARK(s;m) form the vertices of the determined geometric arrangements TRIA(s;t). Thus, each one of the geometric arrangements TRIA(s;t) of the scan F(s) is characterized by a respective number X of the scan's F(s) relevant marker representations R_MARK(s;m), wherein X represents the number of vertices of the geometric arrangement, e.g. X=3 for a triangle.

For the identification of the "relevant" marker representations R_MARK(sc;t) of a particular scan F(sc), all possible pairs of marker representations R_MARK(sc;mi), R_MARK(sc;mj) of the respective scan F(sc) can be evaluated with regard to their mutual euclidic distances. Thus, for each scan F(sc) with sc=s1 and sc=s2 of the scan-pair PRF(n), i.e. for sc=s1 and sc=s2, , the marker representations R_MARK(sc;mi) of a certain pair PRM(sc) of marker representations R_MARK(sc;mi), R_MARK(sc;mj) of one F(sc) of the scans F(s) of the scan-pair PRF(n) are defined to be relevant, in case a corresponding pair PRM(sc') of marker representations R_MARK(sc';mk), R_MARK(sc';ml) with sc'≠sc is included in the other scan F(sc') of the scan-pair PRF(n), which have a similar distance from each other as the marker representations R_MARK(sc;mi), R_MARK(sc;mj) of the certain pair PRM(sc). In more general terms, the scans F(s1), F(s2) are examined to find edges of similar lengths, the endpoints of which are the marker representations. The marker representations of edges of similar length are assumed to be "relevant" marker representations. Here and in the following, distances are assumed to be "similar" and pairs of marker representations are assumed to be "corresponding", respectively, in case the distances do not differ by more than a threshold THRES_ED, e.g. THRES_ED=3%.

In step S_DETPOSEABS of determining the absolute poses POSABS(a) the plurality of the best relative poses POSE(n) of the scan-pairs PRF(n) can be processed by step-wise accumulating selected ones of the best relative poses POSE(n) successively in a given sequence, wherein in each step st of the sequence one POSABS(st) of the absolute poses is generated.

The sequence, which describes which ones of the best relative poses POSE(n) are accumulated, potentially in which order, is generated by determining a minimum spanning tree MST in a graph G(V;E) with edges E(n) and vertices V(a). A minimum spanning tree MST is an approach applied in graph theory, explained below. Therein, the edges E(n) represent the best relative poses POSE(n), the edges E(n) are annotated with a weight w(n)=R(n) according to the best residual R(n) of the respective best relative pose POSE(n), and the vertices V(a) represent the absolute poses POSABS(a) to be found. The sequence includes only those edges E(n') which are included in the minimum spanning tree MST of the given graph G(V;E). Thus, the accumulation of best relative poses POSE(n) only considers the best relative poses POSE(n') according to the edges E(n') included in the minimum spanning tree MST.

The minimum spanning tree MST can be determined such that it includes all the vertices V(a) of the graph G(V;E), it does not include cycles, and the sum of weights w(n')=R(n') of the edges E(n') included in the minimum spanning tree MST is optimized, i.e. minimized or maximized.

Optionally, the method METH might include a step S_ALlGN of further processing the scans F(s) based on the absolute poses POSABS(a) to accurately stitch the scans F(s) to generate the holistic 3D representation MOD3D of the object OBJ. That representation MOD3D might be shown on a display, stored in a memory for further usage like planning, maintenance etc. For that purpose, regular stitching approaches can be applied which utilize knowledge about up to 6D positions of the scanner for capturing the scans F(s).

A system for reproducing absolute poses POSABS(a) of a scanner applied for capturing 3D scans F(s) of an object OBJ, which is equipped with a plurality M'≥3 of markers MARK(m'), for subsequent stitching of at least two of the scans F(s), wherein each one of the scans F(s) includes a plurality M(s)≥3 of marker representations R_MARK(s;m) of a plurality M(s)≤M' of object markers MARK(m') captured with the respective scan F(s), incudes a scanning apparatus for capturing the scans F(s) from different positions relative to the object OBJ and a control unit configured to receive the scans F(s) from the a scanning apparatus and to perform the method METH described above to determine the absolute poses POSABS(a).

The scanning apparatus might comprise at least one scanner which is movable to capture the scans F(s) from different positions relative to the object OBJ or it might comprise a plurality of scanners which are distributed in space such that the scans F(s) can be captured from different positions relative to the object OBJ.

For example, the approach proposed herein can be applied on scans coming from stationary terrestrial laser scanners as used in surveying and metrology, which are usually hemispherical laser scanners. The complete scans are typically captured during the span of a few minutes, have a large range and high precision.

The invention deals with the problem of multiple-scan alignment without corresponding pairs of points in each scan. Such tasks arise frequently in terrestrial laser scanning using hemispherical 3D scanners. The registration markers, e.g. spheres, manually placed in the scene can automatically be extracted and located precisely in 3D by range sensing. Since the imaging modality is not based on cameras, their identities can usually not be uniquely determined, thus they are called uncoded markers. However, sophisticated multiple-scan registration methods such as motion synchronization need the relative pose that aligns the markers from the pairwise correspondences as input. In this invention, congruent triangles are utilized to find possible alignments between two scans, emitting relative pose hypotheses that can then be fed into a motion synchronization framework.

In contrast to established methods like "Iterative Closest Points" algorithms (ICP), the approach suggested herein is significantly faster since it only considers 3D marker locations, but not the geometry. In contrast to machine learning approaches, the inventive approach has the additional benefit that it does not need to be retrained if the target domain differs from the training domain.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

### DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:
- FIG 1: shows a first view onto an object OBJ,
- FIG 2: shows a second view onto the object OBJ,
- FIG 3: shows a system for executing the method METH,

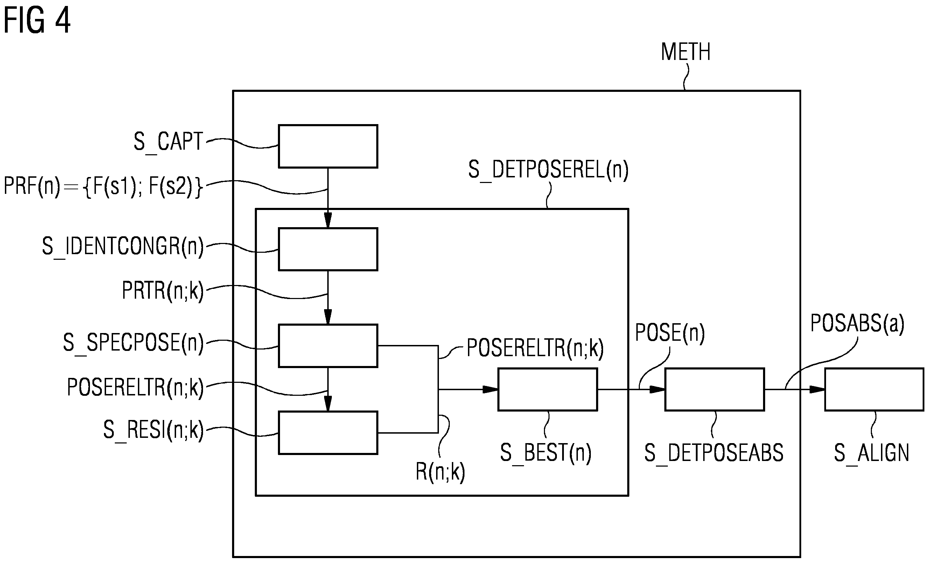

- FIG 4: shows a flow chart of a method METH,
- FIG 5: shows an overlay of a plurality of 2D visualizations of scans F(s), and
- FIG 6: shows a 2D visualization of a holistic 3D representation MOD3D according to the scans F(s).

### DETAILED DESCRIPTION

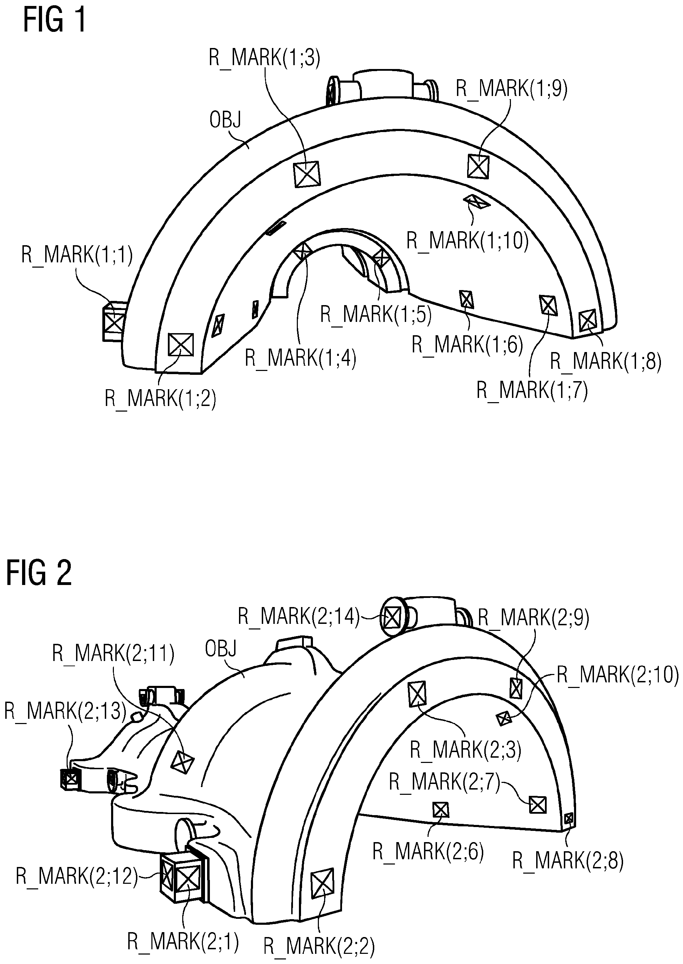

FIG 1 shows a first view onto an object OBJ of interest in an environment, while FIG 2 shows a different view from a different perspective onto the same object OBJ in the same environment. The object OBJ is equipped with a plurality M'≥3 of uncoded markers MARK(m') with m'=1,...,M' and M' representing the total number of markers, e.g. M'=15. Other than suggested in the introduction, the markers MARK(m') used in the example of FIGs 1, 2 are not embodied as spheres, but as stickers with a double-cone like reflective surface. Preferably, the markers MARK(m') are positioned at the object OBJ such that as many markers as possible are well visible from all perspectives from which a respective scanner 110 shall capture 3D scans F(s) with s=1,...,S and S representing the number of scans, e.g. S=15. However, typically not all markers are visible from each and every perspective. To be concrete, FIG 1 shows a 2D representation of a 3D scan F(1) while FIG 2 shows a 2D representation of a 3D scan F(2).

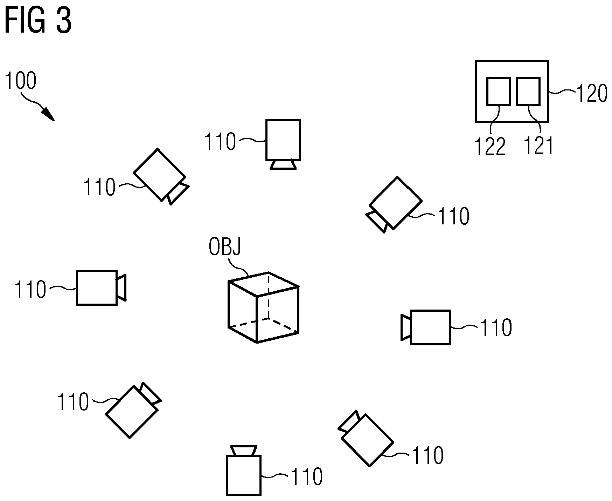

FIG 3 shows a system 100 with a control unit 120 and a plurality of 3D scanners 110 which are distributed in space such that they can capture 3D scans of the object OBJ from different positions and with different views onto the object OBJ. Thus, different scanners 110 have different poses. In FIG 3, the scanners 110 are distributed in one plane. However, it is of course possible the distribute them free in space so that their poses differ from each other in up to six dimensions 6D. Therefore, the relative and absolute poses determined in the following might also be 6D values. The scanners 110 are connected (not shown) to the control unit 120 to provide the captured scans F(s) to the control unit 120. The control unit 120 includes a memory 121 for storing the provided scans F(s) and a software as well as a processor 122. The processor 122 is configured to execute the software which causes the processor 122 to perform the method METH described below.

In a preparational step S_CAPT of capturing the plurality S of 3D scans F(s) of the object OBJ, different scans F(s1), F(s2) are captured from different directions and perspectives, respectively, onto the object OBJ. The scanning technology applied by the respective scanner 110 for capturing a 3D scan F(s) and the types of markers MARK are selected and adapted to each other such that the markers MARK(m') are noticeable in the scans F(s), e.g. "visible" in case the scanning technology is based on optical detection, at least as long as a certain marker MARK(m') is in the line of sight of the respective capturing scanner 110 when a certain scan F(s') is captured. As a result, each captured scan F(s) includes a number M(s)≤M' of marker representations R_MARK(s;m) with m=1,...,M(s), as shown in FIGs 1,2. For example, a data set representing the 3D scan F(s) includes 3D coordinates, representing the positions of markers MARK(m') captured with scan F(s) in the scan's F(s) 3D coordinate system CS(s). Due to the fact that different scans F(s1), F(s2) are captured from different perspectives, it might happen for an individual scan F(s2) that some markers MARK are occluded by obstacles and therefore not visible, so that the number M(s2) of marker representations R_MARK(s2;m) in scan F(s2) is smaller than the total, real number M' of markers MARK in the environment, i.e. M(s2)<M' is applicable in such a scenario. Just for example, representation R_MARK(1;4) visible in scan F(1) shown in FIG 1 is not visible in scan F(2) shown in FIG 2. Vice versa, representation R_MARK(2;13) visible in scan F(2) is not visible in scan F(1) etc.

However, method step S_CAPT results in a plurality S of 3D scans F(s). For example, a scan F(s) and its data set, respectively, might include voxels' 3D coordinates and grey values or RGB values etc. for each respective voxel. The views in FIG 1 and FIG 2 can be interpreted as 2D visualizations of 3D scans F(s1=1), F(s2=2) captured by scanner 110 from different positions.

Each scan F(s) includes a plurality M(s) of marker representations R_MARK(s;m) with m=1,...,M(s). For example, a marker representation R_MARK(s;m) might be expressed by one or more voxels

For example, in case a certain marker MARK is represented in scan F(s) by just one voxel, the respective marker representation in the scan F(s) is the 3D coordinate of that voxel and a grey value which might be, due to the fact that the markers MARK have a strongly reflecting surface in one exemplary embodiment, a very high or possibly the maximum possible grey value.

However, the scans F(s) can be embodied in different forms as well.

The method METH described below is intended to process the entirety of 3D scans F(s) to derive absolute poses POSABS(s) which represent the positions and orientations of the scanner 110 when the individual scans F(s) were captured, typically in a 6D format. Such information POSABS(s) can then be further processed to accurately stitch the individual 3D scans F(s) to generate a holistic 3D representation MOD3D of the object OBJ. The method METH described in the following enables the generation or reproduction, respectively, of the absolute poses POSABS(s) from the 3D scans F(s).

The method METH makes use of the marker representations R_MARK(S;m) included in the scans F(s). For that purpose, each possible scan-pair PRF(n)={F(s1);F(s2)} of scans F(s) with n=1,...,N is observed to find geometric arrangements TRIA(s1;t1), TRIA(s2;t2) of marker representations R_MARK(s1;m1), R_MARK(s2;m2) included in the respective scans F(s1), F(s2) of the pair PRF(n) which are corresponding to each other. Typically, each scan F(s) includes a plurality T(s) of geometric arrangements TRIA(s;t) with t=1,...,T(s).

A geometric arrangement TRIA(s;t) in a scan F(s) is formed from a plurality of the marker representations R_MARK(s;m) of that scan F(s), such that the concerned marker representations R_MARK(s;m) forming the respective geometric arrangement TRIA(s;t) are the vertices of the geometric arrangement TRIA(s;t). Thus, each one of the geometric arrangements TRIA(s;t) of a scan F(s) is characterized by a respective number X of the scan's F(s) marker representations R_MARK(s;m), wherein X represents the number of vertices of the geometric arrangement, e.g. X=3 for a triangle. The simplest and at the same time most effective geometric arrangement TRIA(s;t) qualified for the purpose of method METH is a triangle TRIA(s;t). Although other geometric arrangements like polygons, e.g. pentagons, would also work, the following explanations exemplarily build on the use of triangles for the sake of simplicity.

In one embodiment, not necessarily all available marker representations R_MARK(s;m) of a scan F(s) are used to determine the triangles and geometric arrangements TRIA(s;t), respectively, of that scan F(s), but only relevant ones. Thus, instead of using all marker representations R_MARK(s;m), the determination of the triangles TRIA(sc;t) of a particular scan F(sc) can be based only on the relevant marker representations R_MARK(sc;m) of that scan F(sc), such that only the relevant marker representations R_MARK(s;m) form the vertices of the determined triangles TRIA(s;t).

For the identification of the "relevant" marker representations R_MARK(sc;t) of scan F(sc), all possible pairs of marker representations R_MARK(sc;mi), R_MARK(sc;mj) of that scan F(sc) are evaluated with regard to their mutual euclidic distances. Thus, for each scan F(sc) of the scan-pair PRF(n), i.e. for sc=s1 and sc=s2, the marker representations R_MARK(sc;mi) of a certain pair PRM(sc) of marker representations R_MARK(sc;mi), R_MARK(sc;mj) of one F(sc) of the scans of the scan-pair PRF(n) are defined to be relevant, in case a corresponding pair PRM(sc') of marker representations R_MARK(sc';mk), R_MARK(sc';ml) with sc'≠sc is included in the other scan F(sc') of the scan-pair PRF(n), which have a similar distance from each other as the marker representations R_MARK(sc;mi), R_MARK(sc;mj) of the certain pair PRM(sc). In other words, the scans F(s1), F(s2) are examined to find edges of similar lengths, the endpoints of which are the marker representations. The marker representations of edges of similar length in the two scans F(s1), F(s2) are assumed to be "relevant" marker representations. Therein, distances are assumed to be "similar" and pairs of marker representations are assumed to be "corresponding", respectively, in case the distances do not differ by more than a threshold THRES_ED, e.g. THRES_ED=3%. In more detail, for each scan F(sc) with sc=s1 and sc=s2 of the pair PF(n) edges ED(sc;mi;mj) and their lengths LEN(sc;mi;mj) are determined, wherein each edge ED(sc;mi;mj) connects two of the marker representations R_MARK(sc;mi), R_MARK(sc;mj) of the respective scan F(sc), such that each marker representation R_MARK(sc;m1) is connected to at least one other marker representation R_MARK(sc;m1) of the same scan F(sc). Based on the edges ED(sc;mi;mj) of one of the scans F(sc), corresponding edges ED(sc';mi;mj) of the other scan F(sc') are identified, wherein two edges ED(sc), ED(sc') are assumed to "correspond" to each other in case their lengths LEN(sc), LEN(sc') do not differ by more than the threshold THRES_ED, e.g. THRES_ED=3%. Marker representations R_MARK(sc;mi), R_MARK(sc;mj) are defined to be relevant in case they form the endpoints of an edge ED(sc;mi;mj) in the one scan F(sc) for which a corresponding edge ED(sc';mk;ml) in the other scan F(sc') has been identified. The determination of the triangles TRIA(sc;t) of scan F(sc) is based only on the relevant marker representations R_MARK(sc;m) of the scan F(sc), such that only the relevant marker representations R_MARK(s;m) form the vertices of the determined triangles TRIA(s;t).

However, in a registering step S_REGP of the method METH, a plurality of pairwise registration processes REG(n) of each two scans F(s1), F(s2) of a scan-pair PRF(n)={F(s1);F(s2)} is executed based on one or more determined triangles TRIA(s1;t1), TRIA(s2;t2) of marker representations R_MARK(s1;m1), R_MARK(s2;m2) included in the respective scan F(s1), F(s2). For each scan-pair PRF(n), a best relative pose POSE(n) between the concerned scans F(s1), F(s2) is determined in each pairwise registration REG(n) in a step S_DETPOSEREL(n) based on the determined triangles TRIA(s1;t1), TRIA(s2;t2). Such best relative pose POSE(n) for scans F(s1) F(s2) can be, for example, the difference of the 6D poses of the scanner 110 for capturing those scans F(s1), F(s2). Thus, the registering step S_REGP includes a comparison of triangles TRIA(s1;t1) of the first scan F(s1) of the pair PRF(n) with triangles TRIA(s2;t2) of the second scan F(s2) to determine the best relative pose POSE(n).

A subsequent step S_DETPOSEABS of the method METH includes processing the best relative poses POSE(n) to generate absolute poses POSABS(a) which can then be used to align or stitch, respectively, the scans F(s) to generate the holistic 3D representation MOD3D in an additional step S_ALIGN.

However, coming back to the registering step S_REGP, in each pairwise registration process REG(n), i.e. for each scan-pair PRF(n), the best relative pose POSE(n) between the scans F(s1), F(s2) of a respective scan-pair PRF(n) is determined in the step S_DETPOSEREL(n) based on specific relative poses POSERELTR(n;k) of at least one triangle TRIA(s1;t1) included in one F(s1) of the scans F(s1), F(s2) compared to at least one corresponding triangle TRIA(s2;t2) included in the other one F(s2) of the scans F(s1), F(s2) of the pair PRF(n). I.e. the specific relative poses POSERELTR(n;k) are determined based on a comparison of at least one triangle TRIA(s1;t1) of the first scan F(s1) with a corresponding triangle TRIA(s2;t2) of the second scan F(s2). As mentioned above, "corresponding" means that the concerned triangles have similar geometric dimensions and are essentially congruent to each other, respectively.

A specific relative pose POSERELTR(n;k) can be the difference of poses of the concerned corresponding triangles TRIA(s1;t1), TRIA(s2;t2), typically in a 6D format.

In general terms, the determination of the best relative pose POSE(n) in step S_DETPOSEREL(n) includes a comparison of the tringles TRIA(s1;t1) of scan F(s1) with the triangles TRIA(s2;t2) of scan F(s2) to identify triangle-pairs PRTR(n;k) of corresponding triangles with k=1,...,K(n). Therein, K(n) represents the number of pairs PRTR(n;k) of corresponding triangles for the scan-pair PRF(n)={F(s1);F(s2)}. Thus, only those triangles TRIA(s1;t1'), TRIA(s2;t2') included in the scans F(s1), F(s2) are processed in the step S_DETPOSEREL(n) to determine the best relative pose POSE(n) which are corresponding to each other. For each triangle-pair PRTR(n;k), i.e. for each k, the specific relative pose POSERELTR(n;k) of the concerned triangles is determined. Finally, the best relative pose POSE(n) is determined from those specific relative poses POSERELTR(n;k) as shown below.

Finding the specific relative poses POSERELTR(n;k) for scan-pair PRF(n)={F(s1);F(s2)} in the step S_DETPOSEREL(n) includes a step S_IDENTCONGR(n) of identifying the pairs PRTR(n;k) of corresponding triangles TRIA(s1;t1), TRIA(s2;t2) of the scans F(s1), F(s2) and a subsequent step S_SPECPOSE(n) of determining, for each identified pair PRTR(n;k), i.e. for each k, of corresponding triangles TRIA(s1;t1'), TRIA(s2;t2'), the specific relative pose POSERELTR(n;k) between the concerned corresponding triangles TRIA(s1;t1'), TRIA(s2;t2'). Moreover, a respective residual R(n;k) representing a quality measure for the corresponding specific relative pose POSERELTR(n;k) is determined in a step S_RESI(n;k).

In the step S_IDENTCONGR(n), the triangles TRIA(s1;t1) of the first scan F(s1) of the pair PRF(n) and the triangles TRIA(s2;t2) of the second scan F(s2) of the pair PRF(n) are compared to each other, especially regarding their respective dimensions, e.g. the lengths of their edges. In case one of the triangles TRIA(s1;t1') of the first scan F(s1) is found to be corresponding, e.g. essentially congruent, to one of the triangles TRIA(s2;t2') of the second scan F(s2), such corresponding triangles TRIA(s1;t1'), TRIA(s2;t2') are assigned to each other to form the pair PRTR(n;k) of corresponding triangles. This approach is applied for all triangles TRIA(s1;t1') of the first scan F(s1).

The step S_SPECPOSE(n) can apply the approach suggested by Shinji Umeyama in "Least-squares estimation of transformation parameters between two point patterns", IEEE Transactions on Pattern Analysis & Machine Intelligence, 13(04):376-380, 1991, to determine the specific relative poses POSERELTR(n;k) for the identified pairs PRTR(n;k) of corresponding triangles TRIA(s1;t1'), TRIA(s2;t2').

The respective residual R(n;k') for a certain pair PRTR(n;k') of corresponding triangles TRIA(s1;t1'), TRIA(s2;t2') is determined in step S_RESI(n;k') by using the respective specific relative pose POSERELTR(n;k') from step S_SPECPOSE(n) to combine the marker representations R_MARK(m1;F(s1)) of one F(s1) of the scans with m1=1,...,M1 and the marker representations R_MARK(m2;F(s2)) of the other one F(s2) of the scans F(s1), F(s2) with m2=1,...,M2 to generate a virtual joint scan SCJ(n;k'), which includes the marker representations R_MARK(m1;F(s1)), R_MARK(m2;F(s2)) of both scans F(s1), F(s2). Therein, M1 represents the number of marker representations R_MARK in the first scan F(s1) and M2 represents the number of marker representations R_MARK in the second scan F(s2). Subsequently, a plurality of mutual euclidic distances between inlying marker representations R_MARK(m1';F(s1)), R_MARK(m2';F(s2)) from the first scan F(s1) and the second scan F(s2) is determined. Therein, marker representations R_MARK(m1';F(s1)), R_MARK(m2';F(s2)) are "inlying" in case they are distanced from each other in the coordinate system of the virtual joint scan SCJ(n;k') by less than a threshold THRES_RAD. The residual R(n;k') is then determined based on the mean distance DIS(n;k') of the plurality of determined mutual euclidic distances and/or based on the number NMRAD of the inlying marker representations R_MARK(m1';F(s1)), R_MARK(m2';F(s2)), i.e. of those marker representations R_MARK(m1';F(s1)), R_MARK(m2';F(s2)), which are distanced from each other in the joint scan SCJ(n;k') by less than the threshold THRES_RAD. The threshold THRES_RAD might depend on the scanner's 110 noise level. For example, in case the object OBJ has dimensions in the order of 1m, the threshold THRES_RAD might be in the order of 10mm. Consequently, the residual R(n;k') improves with decreasing mean distance DIS(n;k') and/or with increasing number NMRAD, depending on which one of the parameters is considered and how they are weighted, as the case may be. For example, in case only the mean distance is considered, the "best" residual would be the lowest one of the determined residuals R(n;k).

In one possible embodiment, the virtual joint scan SCJ(n;k') is generated by using the respective specific relative pose POSERELTR(n;k') to transpose or project, respectively, the marker representations R_MARK(m1;F(s1)) with m1=1,...,M1 of the first scan F(s1) into the second scan F(s2), i.e. into the coordinate system CS(s2) of the second scan F(2), to generate the virtual joint scan SCJ(n;k'). Thus, the virtual joint scan SCJ(n;k') is a combination, e.g. an overlay, of the marker representations R_MARK(m2;F(s2)) of the second scan F(s2) and the transposed marker representations R_MARK'(m1;F(s1))=TRANS(R_MARK'(m1;F(s1))) of the first scan F(s1). The transposed marker representations R_MARK'(m1;F(s1)) are generated by applying the specific relative pose POSERELTR(n;k') to each one of the marker representations R_MARK(m1;F(s1)) of the first scan F(s1), so that each one of the marker representations R_MARK(m1;F(s1)) is transposed from the coordinate system CS(s1) of the first scan F(s1) into the coordinate system CS(s2) of the second scan F(s2). In this realization, the coordinate system of the virtual joint scan SCJ(n;k) is identical to the coordinate system CS(s2) of the second scan F(s2), in which the marker representations R_MARK(m2;F(s2)) of the second scan F(s2) are originally localized. In contrast, the marker representations R_MARK(m1;F(s1)) of the first scan F(s1) are originally localized in a different coordinate system CS(s1). However, for each k it is assumed that the relative pose of the coordinate systems CS(s1), CS(s2) is described by the specific relative pose POSERELTR(n;k).

However, the above yields a plurality of specific relative poses POSERELTR(n;k) and corresponding residuals R(n;k) for the scans F(s1), F(s2) of scan-pair PRF(n). The best relative pose POSE(n) is then determined in a step S_BEST(n) to be the one specific relative pose POSERELTR(n;k') which has the best residual RES(n)=R(n;k')=R_{best}(n;k). Depending on the approach to determine the residual, the "best" residual RES(n) can be the highest or the lowest one of the determined residuals R(n;k).

The above, i.e. the registering step S_REGP with step S_DETPOSEREL(n), is performed for all scan-pairs PRF(n), so that a plurality of best relative poses POSE(n) is created. Additionally, the corresponding best residuals RES(n) are provided.

Coming back to the step S_DETPOSEABS, the best relative poses POSE(n) and the corresponding best residuals R(n) are further processed to generate absolute poses POSABS(a) with a=1,...,A. Typically, the total number A of absolute poses POSABS(a) corresponds to the total number S of scans F(s), i.e. A=S.

The absolute poses POSABS(a) generated therewith actually represent the 6D poses of scanner 110 for capturing the 3D scans F(s). Thus, the absolute poses POSABS(a) can be used in step S_ALIGN to stitch the scans F(s) to generate the holistic 3D representation MOD3D of the object OBJ.

For example, set of best relative poses POSE(n) can be averaged or synchronized using rotation averaging or motion synchronization techniques, resulting in the absolute poses POSABS(a). Suitable synchronization techniques are described by Venu Madhav Govindu in "Lie-algebraic averaging for globally consistent motion estimation", Proceedings of the 2004 IEEE Computer Society Conference on Computer Vision and Pattern Recognition, CVPR 2004, volume 1, by Federica Arrigoni, Beatrice Rossi, and Andrea Fusiello in "Spectral synchronization of multiple views in SE(3), SIAM Journal on Imaging Sciences, 9(4):1963-1990, 2016, and by Avishek Chatterjee and Venu Madhav Govindu in "Robust relative rotation averaging", IEEE transactions on pattern analysis and machine intelligence, 40(4):958-972, 2017.

However, a preferred approach to generate the absolute poses POSABS(a) from the best relative poses POSE(n) and best residuals R(n) to be applied in step S_DETPOSEABS includes processes the plurality of the best relative poses POSE(n) of the scan-pairs PRF(n) by step-wise accumulating selected ones of the best relative poses POSE(n) successively in a given sequence such that one POSABS(st) of the absolute poses is generated in each step st=1,...,ST and ST≤S of the sequence. Thus, only a subset POSE(n') of the best relative poses POSE(n) is selected and the poses POSE(n') are accumulated, e.g. added, to generated the absolute poses POSABS(a). For example, POSABS(1)=POSE(n'=1),
POSABS(2)=POSABS(1)+POSE(n'=2)=POSE(n'=1)+POSE(n'=2),
POSABS(3)=POSABS(2)+POSE(n'=3)=POSE(n'=1)+POSE(n'=2)+POSE(n'=3) etc.

Therein, the sequence, which describes which ones of the best relative poses POSE(n) are accumulated in which order, is generated by determining a minimum spanning tree MST in a graph G(V;E) with certain edges E(n) and certain vertices V(a). The edges E(n) represent the best relative poses POSE(n), the edges E(n) are annotated with a weight w(n)=R(n) according to the best residual R(n) of the respective best relative pose POSE(n), and the vertices V(a) of the graph G(V;E) represent the absolute poses POSABS(a). A minimum spanning tree MST is an approach applied in graph theory, which is used to select a subset of edges E of a graph G(V;E) with vertices V which are connected with weighted edged. The minimum spanning tree includes the edges which are required to connect all vertices V of the graph G without any cycles and with the optimum total weight w(n') of the edges E(n'). Therefore, the minimum spanning tree MST is determined in step such that it includes all the vertices V(a) of the graph G(V;E), it does not include cycles, and the sum of weights w(n')=R(n') of the edges E(n') included in the minimum spanning tree MST is optimized, i.e. minimized or maximized.

Consequently, the sequence includes only those edges E(n') which are included in the minimum spanning tree MST. Thus, the accumulation of best relative poses POSE(n) only considers the best relative poses POSE(n') according to the edges E(n') included in the Minimum Spanning Tree MST.

As mentioned above, the absolute poses POSABS(a) determined in step S_DETPOSEABS can then be used to align or stitch, respectively, the scans F(s) in a known manner to generate the holistic 3D representation MOD3D in an additional step S_ALlGN.

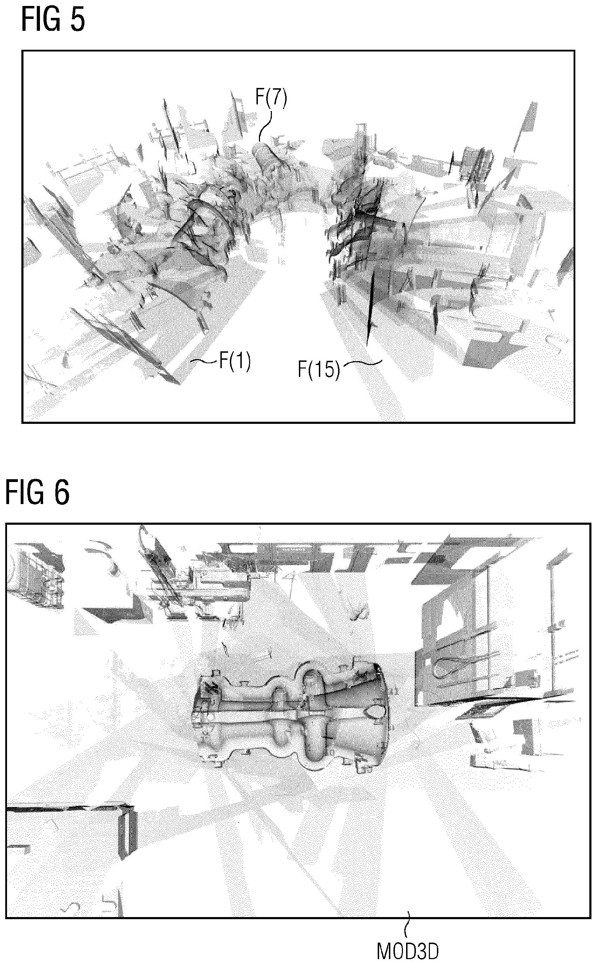

FIG 5 uses a joint coordinate system to exemplarily show a 2D point cloud visualization of an overlay of fifteen scans F(s) of the object OBJ shown in FIGs 1 and 2. The individual scans F(s) have been captured from positions POS(s) which were distributed around the object OBJ such that the positions POS(s) essentially lie on a circle around the object OBJ. Processing such scans F(s) with the method METH described above results in the absolute poses POSABS(a) which can be used to process the scans F(s) to generate the holistic 3D representation MOD3D according to the scans F(s). A 2D point cloud visualization of such a representation MOD3D according to the scans F(s) is exemplarily shown in FIG 6.

Summarizing the above in more general terms and for a certain embodiment, the method METH includes a step of relative pairwise alignment, a step of finding corresponding edges, a step of congruent triangle listing, a step of determining the best pose from triangle correspondences, and absolute pose synchronization. This results in the absolute poses POSABS(a).

"Relative pairwise alignment": From a high-level point of view, the method METH starts with a check for each pair PRF(n) of scans F(s1), F(s2) whether there are enough corresponding markers R_MARK(s1;m1), R_MARK(s2;m2) visible in both of them in order to align the two. Since the markers MARK(s;m) are uncoded, it remains unknown which marker representations R_MARK(s1;m1), R_MARK(s2;m2) correspond to each other. However, distances between marker representations can be observed consistently across scans F(s). Assuming that pairs of two uncoded markers (in the following called "edge") in a pair of frames F(s1), F(s2) have been identified in the concerned frames F(s1), F(s2) which are essentially the same distance apart, there are still two possibilities left to align them, and even then, one degree of freedom, i.e. the rotation around the axis of the edge, is left unconstrained. Hence, at least three uncoded markers are required, forming a triangle consisting of three edges, to be shared across frames F(s). As soon as at least three point-to-point correspondences have been identified, they can be rigidly aligned, e.g. using Umeyama's SVD method introduced above. However, it is a combinatorial task to get the right set of three or more edge or vertex correspondences from uncoded markers. The invention presented herein realizes an efficient, discrete solution using congruent triangles.

"Finding corresponding edges" deals with the ultimate aim to find and match congruent triangles in a pair PRF(n) of scans F(s1), F(s2). This actually means a pair PRTR(n;k) of triangles TRIA(s1;t1), TRIA(s2;t2) that have essentially the same side lengths. For that purpose, all the possible triangles TRIA(s1;t1) in one scan F(s1) and all the possible triangles TRIA(s2;t2) in another scan F(s2) can be listed individually, e.g. using well known triangle listing algorithms. Subsequently, it might be checked whether congruent ones are available. However, due to the sheer number of possible triangles TRIA(s;t) within a scan F(s) and because of the sheer number of possible corresponding triangles between a pair PRF(n) of scans F(s1), F(s2), this approach may quickly become infeasible. Therefore, another strategy can be applied: As a first step, not all possible triangles for each scan F(s) are listed. Instead, only all the edges in each scan F(s) are listed, which results in a much smaller number of cases. Therein, the first step includes the computation of all the pairwise euclidean distances between the marker representations R_MARK(s;m) for each scan F(s1), F(s2). For each one of the two frames, this results in a plurality of undirected edges for each scan. In a second step, the resulting two lists of edges and edge lengths, respectively, are compared to identify a set of corresponding edges in the scans F(s1), F(s2), wherein two edges are assumed to be corresponding in case their lengths do not differ from each other by more than THRES_ED. THRES_ED might correspond to the scanner's 110 noise level for target localization accuracy.

In one embodiment, "congruent triangle listing" might use so called transitive triads. Listing triangles in an undirected graph with the marker representations R_MARK being the graph's vertices can be done via transitive triads G[π] in an induced directed acyclic graph (DAG) defined by the directed edges going from smaller to larger vertex ID. Each triangle of G yields a transitive triad in G[π] relative to which vertices and edges assume unique roles (L, S1, S2), as outlined by M. Ortmann and U. Brandes in "Triangle listing algorithms: Back from the diversion", 2014 Proceedings of the Sixteenth Workshop on Algorithm Engineering and Experiments (ALENEX), pages 1-8, Society for Industrial and Applied Mathematics, 2014. This allows to list triangles exactly once. Further approaches of triangle listing are shown by T. Schank and D. Wagner in "Finding, counting and listing all triangles in large graphs, an experimental study" in International workshop on experimental and efficient algorithms, pages 606-609, Springer, 2005, iterating over all the edges and intersecting incoming or outgoing neighborhoods of its vertices based on the role (L, S1, S2) that the edge is assumed to play.

Such algorithms might be modified to process corresponding edge pairs in two graphs simultaneously instead of just edges in one graph so that congruent triangles are found in the two scans simultaneously instead of just listing arbitrary triangles in each graph one after another. Moreover, a matching congruent triangle is searched for in the second scan F(s2) only if it found one in the first scan F(s1).

The corresponding method runs in two passes over all edges and is explained in detail in the following:
First pass: Fill an adjacency data structure of each used vertex in scan F(s1) and F(s2) with incoming neighborhood, meaning the start of the current edge. Also, an index of the edge is saved since it is the only information shared across scans.
Second pass: Treat each edge as an "role S2" edge. Then, for scans F(s1) and F(s2) each, intersect the incoming neighborhoods of t2 and t3 with each other, to find the vertex set of t1's to form triads and triangles, respectively. Instead of the vertex ID, the used enumerated S1 and L edge as pair {S1,L}. Since these corresponding edge indices are shared across scans, unlike vertex IDs, intersect the triangle set of scan F(s1) with that of scanj F(s2), using the pair {S1,L} as a key. S2 is shared by construction. Each triangle in this intersection is a corresponding triangle in scan F(s1) and scan F(s2). Recover the (different) vertex IDs t1,t2,t3 of this triangle in scans F(s1) and F(s2) and store it.

"Best pose from triangle correspondences" assumes that in the previous step multiple corresponding triangles TRIA(s1;t1), TRIA(s2;t2) between two scans F(s1), F(s2) have been found. For subsequent processing, a simple- and not a multi-graph of scans is applied where the edges define the relative poses between them. It is decided now which one of these correspondences gives the best relative pose aligning POSE(n) these two scans F(s1), F(s2). For that purpose, it is checked which triangle pair TRIA(s1;t1'), TRIA(s2;t2') results in the smallest residual. First, relative poses POSERELTR(n;k) from three point correspondences via Umeyama's SVD approach are computed. Then, all the marker representations are transformed from one scan F(s1) with this pose into the other scan F(s2). All the marker representations which are then less than threshold THRES_RAD apart are considered as inliers, and the mean distance DIS between the inliers is defined to be the residual R. The pose POSERELTR(n;k') with the highest number NMRAD of inliers and/or the smallest residual R(n;k') is defined to be the best relative pose POSE(n) between the two scans F(s1), F(s2). This is applied for each pair PRF(n) of scans so that a corresponding plurality of best relative poses POSE(n) is created, one for each pair of scans and each one representing the relative pose of the scanner 110 when the scans of the respective pair were captured.

Finally, "absolute pose synchronization" processes the highly redundant set of best relative poses POSE(n). For example, this processing can build on averaging or synchronizing the set of best relative poses POSE(n) using rotation averaging or motion synchronization techniques, resulting in a set of absolute poses POSABS(a) with a=1,...,A that is globally consistent. However, an alternative approach is preferred which applies a pose synchronization strategy over the special Euclidean group of rigid body motions (SE(3), ⊗, I, []-1), where ⊗ denotes composition of two poses (R, t)eSE(3). The following assumes a graph G(V;E) with N edge labels I(e)∈SE(3) of the graph's edges E which correspond to the best relative poses POSE(n), while the vertex labels I(v)∈SE(3) of the graph's vertices V stand for absolute poses POSABS(a). Additionally, the edges are annotated with a weight w(e)∈R, corresponding to the "best" residuals RES(n)=R(n;k') which were used earlier to identify the particular relative pose POSERELTR(n;k') as the best relative pose POSE(n). This allows to propagate edge labels along a Minimum Spanning Tree (MST) of the graph G(V;E) of pairwise best edges E towards all vertices V. In one particular embodiment, an MST on the edge weights is computed and subsequently a Depth-first search (DFS) is conducted on each resulting connected component of the graph G to propagate edge labels to vertices.

In the MST computation, a Kruskal algorithm can be executed as described by T. Cormen in "Introduction to algorithms", MIT press, 2009, on the weighted edge set to find a MST for each component in the graph G(V;E) of relative poses. The MST is saved by adding the edge to the outgoing edge set of a start vertex and the incoming edge set of an end vertex.

In the DFS label propagation the absolute poses POSABS(a) are generated via following edges E of relative poses. For this, all connected components are iterated, an arbitrary vertex is piked from each, and a modified DFS is started, e.g. as basically described by D. Jungnickel in "Graphs, networks and algorithms", Springer, 4 edition, 2013. The DFS is modified in so far that it works with the induced directed MST of the graph components from the previous step in combination with group label propagation while visiting a vertex. First, a visited flag is set to "true", then all outgoing edges eₒᵤₜ=(v;w) of the vertex v to vertex w are iterated. In case the vertex w on the other end of the edge has not yet been visited, its label is set to I(w)←I(v)⊗I(eₒᵤₜ). In the case of pose synchronization, this amounts to applying the relative pose POSERELTR(n;k) from edge e to the absolute pose POSABS(a) of the current vertex v and saving the result in the absolute pose of vertex w. Then, DFS(w) is called recursively. Next, all the incoming edges eᵢₙ=(u;v) of the vertex v from vertices u are checked and labels propagated similarly to above. However, differently now the inverse of the edge label is applied in the group operation: I(u)←I(v)⊗I(eᵢₙ)⁻¹. The set of absolute poses POSABS(a) may then be used as initialization for further geometry-based multi-view fine-alignment, which are usually graph-based nonlinear least-squares methods originating from multi-view Iterative Closest Points (ICP) methods.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments but variations can be derived by a person skilled in the art without deviation from the scope of the invention.

## Claims

1. Method METH for reproducing absolute poses POSABS(a) of a scanner (110) applied for capturing 3D scans F(s) of an object OBJ for subsequent stitching of at least two of the scans F(s) to generate a 3D model MOD3D of the object OBJ, wherein each one of the scans F(s) includes a plurality M(s)≥3 of marker representations R_MARK(s;m) with m=1,...,M(s) of object markers MARK(m') captured with the respective scan F(s), wherein the method includes
- a first step S_REGP of registering, including a plurality of pairwise registrations REG(n) of each two scans F(s1), F(s2) of a scan-pair PRF(n)={F(s1);F(s2)} based on one or more determined geometric arrangements TRIA(s1;t1), TRIA(s2;t2) of the marker representations R_MARK(s1;m1), R_MARK(s2;m2) included in the respective scan F(s1), F(s2), wherein a best relative pose POSE(n) between the concerned scans F(s1), F(s2) is determined for each pair PRF(n) based on the determined geometric arrangements TRIA(s1;t1), TRIA(s2;t2),
- a second step S_DETPOSEABS of processing the best relative poses POSE(n) to generate absolute poses POSABS(a).

2. Method according to claim 1, wherein the one or more geometric arrangements TRIA(s;t) included in scan F(s) are polygons, especially triangles, which are determined based on the marker representations R_MARK(s;m) included in the scan F(s), such that marker representations R_MARK(s;m) determining one of the polygons TRIA(s;t1) of scan F(s) represent the vertices of the respective polygon TRIA(s;t1).

3. Method according to any one of claims 1 to 2, wherein, for each scan-pair PRF(n), the best relative pose POSE(n) between the scans F(s1), F(s2) of the scan-pair PRF(n) is determined in a step S_DETPOSEREL(n) based on specific relative poses POSERELTR(n;k) with k=1,...,K of at least one geometric arrangement TRIA(s1;t1) included in one F(s1) of the scans F(s1), F(s2) compared to at least one corresponding geometric arrangement TRIA(s2;t2) included in the other one F(s2) of the scans F(s1), F(s2) of the pair PRF(n).

4. Method according to claim 3, wherein only those geometric arrangements TRIA(s1;t1'), TRIA(s2;t2') included in the scans F(s1), F(s2) are processed in the step S_DETPOSEREL(n) which are corresponding to each other.

5. Method according to any one of claims 3 to 4, wherein, in the step S_DETPOSEREL(n), for each scan-pair PRF(n),
- pairs PRTR(n;k) of corresponding geometric arrangements TRIA(s1;t1), TRIA(s2;t2) of the first scan F(s1) and of the second scan F(s2) of the pair PRF(n) are identified in a step S_IDENTCONGR(n),
- for each identified pair PRTR(n;k) of corresponding geometric arrangements TRIA(s1;t1'), TRIA(s2;t2'),
-- a specific relative pose POSERELTR(n;k) between the concerned corresponding geometric arrangements TRIA(s1;t1'), TRIA(s2;t2') is determined in a step S_SPECDET(n) and
-- a respective residual R(n;k) is determined in a step S_RESI(n;k),
- the best relative pose POSE(n) is determined in a step S_BEST(n) to be the specific relative pose POSERELTR(n;k') with the best residual R(n;k').

6. Method according to claim 5, wherein, in the step S_IDENTCONGR(n), the geometric arrangements TRIA(s1;t1) of the first scan F(s1) of the pair PRF(n) and the geometric arrangements TRIA(s2;t2) of the second scan F(s2) of the pair PRF(n) are compared to each other and in case one of the geometric arrangements TRIA(s1;t1') of the first scan F(s1) is found to be corresponding to one of the geometric arrangements TRIA(s2;t2') of the second scan F(s2), such congruent geometric arrangements TRIA(s1;t1'), TRIA(s2;t2') are assigned to each other to form the pair PRTR(n;k) of corresponding geometric arrangements.

7. Method according to any one of claims 5 to 6, wherein the residual R(n;k') for a certain pair PRTR(n;k') of corresponding geometric arrangements TRIA(s1;t1'), TRIA(s2;t2') is determined by
- using the respective specific relative pose POSERELTR(n;k') to combine the marker representations R_MARK(m1;F(s1)) of one F(s1) of the scans with m1=1,...,M1 and the marker representations R_MARK(m2;F(s2)) of the other one F(s2) of the scans F(s1), F(s2) with m2=1,...,M2 to generate a joint scan SCJ(n;k'),
- determining a plurality of mutual distances between those inlying marker representations R_MARK(m1';F(s1)), R_MARK(m2';F(s2)) of the first scan F(s1) and the second scan F(s2), which are distanced from each other in the joint scan SCJ(n;k') by less than a threshold THRES_RAD, and
- determining the residual R(n;k') based on
-- the mean distance DIS(n;k') of the plurality of determined mutual distances and/or
-- the number NMRAD of the inlying marker representations R_MARK(m1';F(s1)), R_MARK(m2';F(s2)).

8. Method according to claim 7, wherein the virtual joint scan SCJ(n;k') is a combination of the marker representations R_MARK(m2;F(s2)) of the second scan F(s2) and the transposed marker representations R_MARK'(m1;F(s1))=TRANS(R_MARK'(m1;F(s1))) of the first scan F(s1), wherein the transposed marker representations R_MARK'(m1;F(s1)) of the first scan F(s1) are generated by applying the specific relative pose POSERELTR(n;k') to each one of the marker representations R_MARK(m1;F(s1)) of the first scan F(s1), so that each one of the marker representations R_MARK(m1;F(s1)) is transposed from the coordinate system CS(s1) of the first scan F(s1) into the coordinate system CS(s2) of the second scan F(s2).

9. Method according to any one of claims 1 to 8, wherein the determination of the geometric arrangements TRIA(sc;t) of scan F(sc) is based only on relevant marker representations R_MARK(sc;m) of the scan F(sc) such that only the relevant marker representations R_MARK(s;m) form the vertices of the determined geometric arrangements TRIA(s;t).

10. Method according to claim 9, wherein, for each scan F(sc) of the scan-pair PRF(n), the marker representations R_MARK(sc;mi) of a certain pair PRM(sc) of marker representations R_MARK(sc;mi), R_MARK(sc;mj) of one F(sc) of the scans F(s) of the scan-pair PRF(n) are defined to be relevant, in case a corresponding pair PRM(sc') of marker representations R_MARK(sc';mk), R_MARK(sc';ml) with sc'≠sc is included in the other scan F(sc') of the scan-pair PRF(n), which have a similar distance from each other as the marker representations R_MARK(sc;mi), R_MARK(sc;mj) of the certain pair PRM(sc).

11. Method according to any one of claims 1 to 10, wherein, in step S_DETPOSEABS, the plurality of the best relative poses POSE(n) of the scan-pairs PRF(n) is processed by step-wise accumulating selected ones of the best relative poses POSE(n) successively in a given sequence, wherein in each step st=1,...,ST and ST≤S of the sequence one POSABS(st) of the absolute poses is generated.

12. Method according to claim 11, wherein the sequence, which describes which ones of the best relative poses POSE(n) are accumulated, is generated by determining a Minimum Spanning Tree MST in a graph G(V;E) with edges E(n) and vertices V(a), wherein
- the edges E(n) represent the best relative poses POSE(n),
- the edges E(n) are annotated with a weight w(n)=R(n) according to the best residual R(n) of the respective bestr relative pose POSE(n), and
- the vertices V(a) represent the absolute poses POSABS(a),
and wherein
- the sequence includes only those edges E(n') which are included in the Minimum Spanning Tree MST.

13. Method according to claim 12, wherein the Minimum Spanning Tree MST is determined such that
- it includes all the vertices V(a) of the graph G(V;E),
- it does not include cycles, and
- the sum of weights w(n')=R(n') of the edges E(n') included in the Minimum Spanning Tree MST is optimized.

14. System (100) for reproducing absolute poses POSABS(a) of a scanner (110) applied for capturing 3D scans F(s) of an object OBJ for subsequent stitching of at least two of the scans F(s), wherein each one of the scans F(s) includes a plurality M(s)≥3 of marker representations R_MARK(s;m) with m=1,...,M(s) of object markers MARK(m') captured with the respective scan F(s), including
- a scanning apparatus (110) for capturing the scans F(s) from different positions relative to the object OBJ,
- a control unit (120) configured to receive the scans F(s) from the scanning apparatus (110) and to perform the method METH according to any one of claims 1 to 13 to determine the absolute poses POSABS(a).

15. System according to claim 14, wherein the scanning apparatus comprises
- at least one scanner (110) which is movable to capture the scans F(s) from different positions relative to the object OBJ or
- a plurality of scanners (110) which are distributed in space such that the scans F(s) can be captured from different positions relative to the object OBJ.
